(19) **Europäisches Patentamt**

**European Patent Office**

**Office européen des brevets**

(11) **EP 0 720 890 B2**

(12) **NEUE EUROPÄISCHE PATENTSCHRIFT**

(45) Veröffentlichungstag und Bekanntmachung des Hinweises auf die Entscheidung über den Einspruch:
**05.06.2002 Patentblatt 2002/23**

(45) Hinweis auf die Patenterteilung:
**06.05.1999 Patentblatt 1999/18**

(21) Anmeldenummer: **95810676.7**

(22) Anmeldetag: **30.10.1995**

(51) Int Cl.$^7$: **B24B 1/04**

(54) **Handgerät zur materialabtragenden Bearbeitung von spröden und/oder duktil versagenden Werkstoffen**

Hand tool for the removal of material from brittle and/or non ductile materials

Outil à main pour l'usinage par enlèvement de matière pour matières fragiles et/ou non ductiles

(84) Benannte Vertragsstaaten:
**AT BE CH DE ES FR GB IT LI SE**

(30) Priorität: **16.12.1994 DE 4444853**

(43) Veröffentlichungstag der Anmeldung:
**10.07.1996 Patentblatt 1996/28**

(73) Patentinhaber: **HILTI Aktiengesellschaft 9494 Schaan (LI)**

(72) Erfinder:
• **Stöck, Maximilian**
  **CH-9478 Azmoos (CH)**
• **Magyari, Eugen**
  **CH-9473 Gams (CH)**
• **Obermeier, Josef**
  **D-86971 Peiting (DE)**
• **Ofner, Peter**
  **A-6800 Feldkirch (AT)**

(74) Vertreter: **Müller - Hoffmann & Partner Patentanwälte, Innere Wiener Strasse 17 81667 München (DE)**

(56) Entgegenhaltungen:
EP-A- 0 277 823     CH-A- 676 097
DE-A- 3 919 895     US-A- 2 818 686
US-A- 3 471 724     US-A- 3 614 484
US-A- 4 667 755     US-A- 4 828 052

EP 0 720 890 B2

**Beschreibung**

Die Erfindung betrifft ein Handgerät zur materialabtragenden Bearbeitung von spröden und/oder duktil versagenden Werkstoffen gemäss Oberbegriff des Patentanspruchs 1.

In der Bauindustrie, im Installations- und Elektrogewerbe usw. ist es vielfach nötig, Baustoffe wie Beton mit oder ohne Armierungseisen, Holz und Mauerwerk aber auch Metall materialabtragend zu bearbeiten, um auf diese Weise beispielsweise Durchbrüche oder Kanäle für Leitungen, Vertiefungen für das Anbringen von Steckerdosen u.v.a.m. zu erstellen. Bevorzugt werden dafür Handgeräte in Verbindung mit geeigneten Bearbeitungswerkzeugen eingesetzt. Derartige Handgeräte stellen beispielsweise die Handkembohrgeräte oder die Handgeräte zur Oberflächen- oder zur Schlitzbearbeitung der Anmelderin dar, die beispielsweise im Produktekatalog der Anmelderin, Systemlösungen für den Bau 1994/95, Seiten 92-95 bzw. Seiten 111-113 beschrieben sind. Während diese Handgeräte der Anmelderin ein sehr breites Anwendungsspektrum aufweisen und sich im Alltagseinsatz bei einer hohen Materialabbaurate bereits bewährt haben, besteht dennoch der Wunsch nach Verbesserungen.

Insbesondere soll die Abbaurate noch weiter erhöht werden. Zugleich soll die vom Anwender des Gerätes aufzubringende Anpresskraft reduziert werden, um das Einsatzspektrum des Handgeräts noch ausdehnen zu können. Die Lärm- und Vibrationsbelastung des Anwenders durch das Handgerät soll noch weiter herabgesetzt werden. Der Verschleiss der im Handgerät eingesetzten Bearbeitungswerkzeuge, beispielsweise durch Reibung oder chemische Wechselwirkung zwischen der Schneide des Bearbeitungswerkzeuges und dem Werkstück, soll verringert werden. Die Wärmebelastung des Bearbeitungswerkzeugs an der Schneide soll reduziert werden. Die Standzeit der Handgerät - Werkzeug Kombination soll noch weiter erhöht werden. Das verbesserte Gerät soll in Kombination mit geeigneten Bearbeitungswerkzeugen für die materialabtragende Bearbeitung von spröden Werkstoffen wie auch für die Bearbeitung von duktil versagenden Werkstoffen, beispielsweise Weichmetallen wie Aluminium, Kupfer etc., einsetzbar sein. Durch die Verbesserung des Handgerätes soll auch die Möglichkeit geschaffen werden, die bei der materialabtragenden Bearbeitung von Werkstoffen auftretende Staubbelastung des Anwenders noch Weiter zu reduzieren.

Aus US 3,614,484 ist es bekannt, die abtragende Bearbeitung von harten und brüchigen, aber auch laminierten Leichtmetall-Schichtverbunden mit stationären Bearbeitungs- insbesondere Bohrmaschinen durch Unterstützung mittels eines mit einer Werkzeugaufnahme versehenen Ultraschalladapters zu verbessern, der von einem maschinenseitigen Werkzeugantrieb angetrieben wird und dessen Ultraschallerregersystem über eine in einem Nebengehäuse untergebrachte Schleifringanordnung durch einen externen, separaten Ultraschallgenerator gespeist ist.

Ebenfalls für stationäre, materialabtragende Bearbeitungsmaschinen, insbesondere auch für solche, die über eine Pressluftturbine angetrieben werden, ist es aus US 3,471,724 bekannt, dem Werkzeugantrieb in der jeweiligen Bearbeitungsrichtung, z. B. beim Trennschleifen, Sägen, Bohren, eine magnetostriktiv erzeugte Ultraschallunterstützung zu überlagern. Auch in diesem Fall erfolgt die HF-Leistungszuführung zu den magnetostriktiven Ultraschallerregern von einem externen HF-Generator über Schleifringe, wobei zusätzliche Maßnahmen zur Kühlung der magnetostriktiven Erregerelemente getroffen sind.

Ähnliches gilt für die in CH 676 097 A5 beschriebene Ultraschallbearbeitungsmaschine mit hohen und höchsten Arbeitsdrehzahlen, für die Ständerbohrmaschine mit Ultraschallunterstützung gemäß US 2,818,686 sowie für die in DE 39 19 895 A1 beschriebene Ständer-Honmaschine mit zusätzlicher axialer und/oder rotatorischer Ultraschallunterstützung und auch für die ultraschallunterstützte Schneidvorrichtung nach EP 0 277 823 A1.

Der Erfindung liegt daher die Aufgabe zugrunde, ein Handgerät der gattungsgemässen Art im Hinblick auf die vorstehend geschilderten Anforderungen zu verbessern. Diese Aufgaben werden durch ein Handgerät zur materialabtragenden Bearbeitung von spröden und/oder duktil versagenden Werkstoffen gelöst, welches die im kennzeichnenden Teil des Patentanspruchs 1 angeführten Merkmale aufweist. Insbesondere sind bei dem gattungsgemässen Handgerät gemäss der Erfindung innerhalb des Gehäuses ein elektroakustischer Wandler für die Erzeugung von Ultraschallschwingungen und ein Schwingungsverstärker angeordnet, mit denen im Betrieb des Geräts der Rotation des Bearbeitungswerkzeugs Ultraschallschwingungen überlagerbar sind. Auf diese Weise wird der durch die Rotation des Bearbeitungswerkzeugs bedingte abrasive oder zerspanende Abbaumechanismus durch einen zusätzlichen Abbaumechanismus in Form eines direkten Stosses des Bearbeitungswerkzeugs unterstützt. Auf diese Weise steigt die Abbaurate gegenüber konventionellen Bearbeitungsmethoden ohne Ultraschallunterstützung stark, typischerweise um den Faktor 2-10 an. Zum Unterschied von konventionellen Hammerbohrgeräten nach dem schlagenden Prinzip, bei dem einzelne Spannungswellen durch das Bearbeitungswerkzeug laufen und dann abklingen, wird durch die Überlagerung von Ultraschallschwingungen im Bearbeitungswerkzeug eine stehende Welle aufrechterhalten, deren Energie in den abzutragenden Werkstoff eingeleitet wird.

Die Ultraschallunterstützung resultiert auch in einer deutlichen Reduktion der erforderlichen Anpresskraft. Dadurch können Handanwendungen auch auf Bereiche ausgedehnt werden, in denen derzeit noch auf konventionelle Weise mit stationären Geräten gearbeitet werden muss. Da durch die Ultraschallschwingungen die Reibung deutlich reduziert wird, entstehen an den Kontaktbereichen des Bearbeitungswerkzeugs mit dem abzutragenden Werkstoff kleinere Temperaturen. Die Reduktion der Reibung resultiert in einer geringeren Abrasion des Werkzeugs. Zugleich wird durch die niedrigeren Temperaturen auch die chemische Wechselwirlung zwischen dem Werzeug und dem Werkstück herabgesetzt. Dies wird auch noch durch den Effekt des Mikrohämmerns unterstützt, da auf diese Weise die Kontaktzeit des Werkzeugs mit dem abzutragenden Werkstoff verringert wird. Auch wird der Kontaktbereich des Bearbeitungswerkzeugs mit dem Werkstoff durch das Mikrohämmern kaltverfestigt, was der längeren Standzeit des Werkzeugs zugute kommt. Die Erzeugung von Ultraschallwellen und die durch die Ultraschallwellen hervorgerufene Stosswirkung des Bearbeitungswerkzeugs sind nur mit einer geringen Lärm- und Vibrationsbelastung des Anwenders des Gerätes verbunden und ist deutlich niedriger als die Lärm- und Vibrationsbelastung bei konventionellen Handgeräten nach dem schlagenden Prinzip. Berücksichtigt man, dass das Hand - Arm System insbesondere im Bereich von 1-200 Hz besonders empfindlich ist, so ist unmittelbar einsichtig, dass Vibrationen im Ultraschallbereich vernachlässigbar sind.

Die Frequenz und die Amplitude der erzeugten Ultraschallwellen werden auf die Schnittgeschwindigkeit des Bearbeitungswerkzeugs abgestimmt und vorzugsweise derart eingestellt, dass gilt

$$0{,}5{\cdot}v < \omega{\cdot}2{\cdot}a < 5{\cdot}v,$$

wobei $\omega$ die Kreisfrequenz und a die Amplitude der Ultraschallschwingung bezeichnet, und v für die Schnittgeschwindigkeit des Bearbeitungswerkzeugs im abzutragenden Werkstoff in Metern/Sekunde steht. Auf diese Weise ist gewährleistet, dass der Weg des Kontaktbereichs des Bearbeitungswerkzeugs mit dem abzutragenden Werkstoff zwischen zwei Stössen des Werkzeugs in einer Grössenordnung liegt, die den Effekt des Mikromeisselns begünstigt.

Vorzugsweise wird ein elektroakustischer Wandler gewählt, der eine Ultraschalleistung von etwa 100 W bis etwa 1000 W, vorzugsweise etwa 200 W bis etwa 500 W abgibt. Elektroakustische Wandler dieser Leistungsklasse haben ein ausgewogenes Verhältnis von Leistung zu Gewicht und Grösse und können gut in Handgeräten gewohnter Dimensionen untergebracht werden. Besonders bevorzugt sind dabei magnetostriktive oder piezoelektrische Wandler, die in den erforderlichen Leistungsklassen erhältlich sind, zuverlässig und weitgehend unempfindlich gegenüber den in den üblichen Einsatzgebieten herrschenden Handhabungsangewohnheiten sind.

Das Bearbeitungswerkzeug ist bevorzugt in einer Werkzeugaufnahme gehaltert, die im wesentlichen im Bereich eines Schwingungsknotens der erzeugten Ultraschallschwingungen angeordnet ist. In diesen Bereichen liegt die Energie der erzeugten Ultraschallschwingungen weitgehend als potentielle Energie vor. Dadurch ist der Einsteckbereich des Bearbeitungswerkzeugs von Vibrationsbelastungen weitgehend entkoppelt. Vorzugsweise sind die Fügestellen der einzelnen Komponenten des elektroakustischen Wandlers und des Schwingungsvemtärkers in Bereichen von Schwingungsknoten der erzeugten Ultraschallschwingungen angeordnet. Wie für den Fall der Werkzeugaufnahme gilt auch hier, dass die Energie der Ultraschallschwingungen in diesen Bereichen weitgehend als potentielle Energie vorliegt, so dass die Fügestellen keinen Längs- oder Querbelastungen ausgesetzt sind, die in unerwünschten Relativbewegungen der Einzelkomponenten zueinander resultieren könnten.

Die Länge des am Handgerät befestigbaren Bearbeitungswerkzeugs ist vorzugsweise derart bemessen, dass am mit dem zu bearbeitenden Werkstoff in Kontakt tretenden Bereich ein Schwingungsbauch der erzeugten Ultraschallschwingungen anliegt. Auf diese Weise liegt am mit dem abzutragenden Werkstoff in Kontakt kommenden Bereich des Bearbeitungswerkzeugs die Energie der Ultraschallschwingung im wesentlichen nur in Form von kinetischer Energie vor und kann für die stossende Bearbeitung des Werkstoffs eingesetzt werden.

Als Material für das Bearbeitungswerkzeug werden Materialien bevorzugt, die eine geringe Dämpfung gegenüber den Ultraschallschwingungen aufweisen. Vorzugsweise wird ein gehärteter Kohlenstoffstahl oder eine Aluminium- oder Titanlegierung verwendet, welche Materialien neben den geringen Dämpfungseigenschaften gegenüber von Ultraschallschwingungen die erforderlichen Festigkeiten aufweisen.

Die überlagerte rotatorische und translatorische Bewegung des Bearbeitungswerkzeugs wird dadurch realisiert, dass der Schwingungsverstärker innerhalb des Gehäuses drehbar gelagert ist und mit Hilfe der elektrischen Antriebsmittel um seine Längsachse rotierbar ist. Dabei ist die Werkzeugaufnahme am Schwingungsverstärker vorgesehen. Auf diese Weise kann die Energie der Ultraschallschwingungen direkt vom Schwingungsverstärker in das Bearbeitungswerkzeug eingekoppelt werden. Verluste durch Zwischenstücke entfallen.

In einer bevorzugten Ausführungsvariante der Erfindung ist der elektroakustische Wandler zur Erzeugung von longitudinalen Ultraschallschwingungen der Wellenlänge $\lambda$ von etwa 10 bis 40 cm ausgebildet. Durch diese Wahl der Wellenlänge können noch Bearbeitungswerkzeuge einer vernünftigen Baulänge für Handanwendungen eingesetzt werden. Die Gesamtbaulänge des Handgeräts inklusive Bearbeitungswerkzeug sollte dabei mindestens das Dreifache der halben Wellenlänge der erzeugten Ultraschallschwingung betragen. Die maximale Gesamtbaulänge des erfindungsgemässen Handgeräts sollte 10•λ/2 nicht überschreiten.

Eine bevorzugte Ausführungsvariante eines Bearbeitungswerkzeugs für den Einsatz in Verbindung mit longitudinalen Ultraschallschwingungen ist ein rohr- oder stabförmiges Werkzeug der Länge nλ/2 mit n = 1, 2, 3, ... ist, welches an seinem vorderen Ende mit Schneidkörpern bestückt ist. Im Betrieb führt das Werkzeug longitudinale Schwingungen aus, die in Richtung der Anpresskraft wirken. Ein erfindungsgemässes Handgerät mit einem derartigen Bearbeitungswerkzeug kann beispielsweise anstelle einer konventionellen Hammerbohrmaschine eingesetzt werden. Der elektroakustische Wandler für longitudinale Ultraschallschwingungen übernimmt dabei die Funktion eines elektropneumatischen Schlagwerks. Die erfindungsgemäss ausgestatteten Geräte können insbesondere auch zum Erstellen von Mauerdurchbrüchen eingesetzt werden. Derzeit existiert für diesen Einsatzzweck eine separate Gerätelinie, die in Verbindung mit Bohrkronen zur Anwendung kommt.

Zur Bearbeitung von duktil versagenden Werkstoffen sind am Bearbeitungswerkzeug in Schnittrichtung gesehen, vor jedem Schneidkörper Ausnehmungen vorgesehen. Auf diese Weise kann die in das Werkzeug eingeleitete longitudinale Ultraschallschwingung in Richtung der Schnittkraft umgelenkt werden, um derart sowohl eine Schwingungsunterstützung in Richtung der Anpresskraft wie auch in Richtung der Schnittkraft zu erzielen. Dadurch wird die erforderliche Anpresskraft reduziert.

Durch die Austattung eines rohrförmigen Bearbeitungswerkzeugs mit Schneidkörpem, die mit asymmetrischen Ueberständen am Vorderende des Werkzeugs angeordnet sind, kann die longitudinale Ultraschallschwingung bei der Rotation des Werkzeugs etwa radial nach aussen und oben umgelenkt werden. Auf diese Weise kann insbesondere bei mit Schneidsegmenten besetzten Bohrkronen die Spülwirkung verbessert werden.

Ein bevorzugtes scheibenförmiges Bearbeitungswerkzeug besitzt einen Aussendurchmesser und weist an seinem Umfang und an den äusseren seitlichen Randbereichen Schneidkörper auf. Seine axiale Erstreckung beträgt nλ/2 mit n = 1, 2, 3. In seinem zentralen Bereich weist das scheibenförmige Bearbeitungswerkzeug eine axiale Bohrung eines bestimmten Durchmessers auf, wobei das Werkzeug einen mittleren Durchmesser aufweist, der als die Hälfte der Summe des Aussendurchmessers des Werkzeugs und des Innendurchmessers der axialen Bohrung definiert ist. Vorzugsweise ist das Bearbeitungswerkzeug gemäss der Gleichung

$$f_r = c_L / D_M \pi$$

auf eine radiale Resonanzfrequenz des scheibenförmigen Werkzeugs abgestimmt, wobei $f_r$ für die radiale

Resonanzfrequenz $c_L$ für die longitudinale Schallgeschwindigkeit im Werkzeug und $D_M$ für den mittleren Durchmesser des scheibenförmigen Werkzeugs steht. Auf diese Weise wird die axial eingeleitete longitudinale Ultraschallwelle durch Querkontraktionen in eine radiale Ultraschallwelle umgelenkt. Dadurch erfolgt die Schwingung des für die Schlitzbearbeitung eingesetzten Bearbeitungswerkzeugs wieder in Richtung der Anpresskraft. Durch die ultraschallunterstützte Bearbeitung des abzutragenden Werkstoffes kann die Drehzahl des scheibenförmigen Bearbeitungswerkzeugs deutlich, beispielsweise um bis zu zwei Grössenordnungen, abgesenkt werden, was die Arbeitssicherheit erhöht und die Lärmemissionen vermindert.

Ein bevorzugtes Bearbeitungswerkzeug für die Schlitzbearbeitung ist ein scheibenförmiges Werkzeug, welches an seinem Umfang und an den äusseren seitlichen Randbereichen Schneidkörper aufweist, und dessen axiale Erstreckung nλ/2 mit n=1, 2, 3, ... beträgt. Die longitudinalen Ultraschallschwingungen induzieren auf der Scheibe Biegewellen. Die kinetische Energie der Biegewellen hat dann ihr Maximum am Umfang der Scheibe, wenn der Aussendurchmesser der Scheibe ein ganzzahliges Vielfaches der halben Wellenlänge der Biegewellen auf dem scheibenförmigen Werkzeug beträgt. Auf diese Weise wird die Schlitzbearbeitung durch Lateralwellen unterstützt, die von den longitudinalen Ultraschallwellen induziert werden. Dadurch kann die erforderliche Umdrehungsgeschwindigkeit der Scheibe deutlich reduziert werden, was die Arbeitssicherheit erhöht und Lärmemissionen vermindert.

Ein fingerförmiges Schleifwerkzeug weist eine etwa zylinderförmige Gestalt auf. Der Aussenmantel des Zylinders ist zur Schlitzbearbeitung mit Schleifkörpern besetzt. Seine axiale Länge beträgt ein ganzzahliges Vielfaches der halben Wellenlänge der eingeleiteten longitudinalen Ultraschallschwingungen. Die Schwingung des Bearbeitungswerkzeugs erfolgt lateral zur Schnittrichtung, was unter anderem auch die Spülung erleichtert. Zudem kann durch die Ultraschallunterstützung die Umdrehungsgeschwindigkeit des Werkzeugs deutlich reduziert werden, was die Arbeitssicherheit erhöht und die Lärmemissionen vermindert. In einer Variante dieses Bearbeitungswerkzeugs wird die longitudinale Ultraschallschwingung in eine Biegemode des Werkzeugs umgewandelt. Dies erfolgt beispielsweise durch die Anordnung einer kleinen exzentrischen Masse am vorderen Ende des Werkzeugs. Dadurch erfolgt eine Schwingung in Richtung der Anpresskraft, wodurch die erforderliche Anpresskraft noch weiter herabgesetzt wird.

Ein bevorzugtes Bearbeitungswerkzeug ist ein Schleifwerkzeug in Form einer Topf- oder Planscheibe, welche an ihrem mit dem zu bearbeitenden Werkstoff in Kontakt tretenden Bereich mit Schleifkörpem ausgestattet ist. Die axiale Erstreckung des Werkzeugs beträgt nλ/2 mit n=1, 2, 3, ... , der Durchmesser ein ganzzahliges Vielfaches der halben Wellenlänge von Biegeschwingungen beträgt, welche durch die longitudinalen Ultraschallschwingungen im scheibenförmigen Schleifwerkzeug angeregt werden. Die Schwingung des Werkzeugs erfolgt somit in Richtung der Anpresskraft, welche dadurch reduziert werden kann. Durch die Ultraschallunterstützung kann die Drehzahl des Werkzeugs deutlich verringert werden. Dadurch wird die Reibungswärme vermindert. Zudem unterstützen die induzierten Biegewellen auch die Spülung. Die Schnittgeschwindigkeit des Werkzeugs nimmt mit dem Radius zu. Um den Effekt des Mikromeisselns noch weiter zu verstärken, werden die Ränder des scheibenförmigen Bearbeitungswerkzeugs dicker oder dünner gestaltet als der übrige Bereich der Scheibe. Auf diese Weise wird die Amplitude der induzierten Biegeschwingungen verstärkt, was dem Effekt des Mikromeisselns unmittelbar zugute kommt.

Ein weiteres bevorzugtes Bearbeitungswerkzeug zum Einsatz mit einem Handgerät für die Überlagerung von longitudinalen Ultraschallschwingungen ist ein walzenförmiges Schleifwerkzeug, an dessen Umfang eine axiale Schleiffläche mit Schleifkörpern angeordnet ist. Die axiale Erstreckung des Werkzeugs beträgt $n\lambda/2$ mit n=1,2,3 ... . Das Werkzeug besitzt eine axiale Bohrung eines bestimmten Durchmessers, wobei das Werkzeug einen mittleren Durchmesser aufweist, der als die Hälfte der Summe des Aussendurchmessers des Werkzeugs und des Innendurchmessers der axialen Bohrung definiert ist und gemäss der Gleichung

$$f_r = c_L/D_M\pi$$

auf eine radiale Resonanzfrequenz des walzenförmigen Werkzeugs abgestimmt ist. Dabei steht $f_r$ für die radiale Resonanzfrequenz, $c_L$ für die longitudinale Schallgeschwindigkeit im Werkzeug und $D_M$ für den mittleren Durchmesser des walzenförmigen Werkzeugs. Die eingeleitete longitudinale Ultraschallschwingung wird bei dem derart ausgebildeten Werkzeug in den Schwingungsknoten durch Querkontraktionen in radiale Wellen umgewandelt. Die Schwingung des Werkzeugs erfolgt daher wiederum in Richtung der Anpressskraft. Diese kann dadurch reduziert werden, bzw. wird mit gleicher Anpresskraft eine höhere Abtragrate erzielt. Durch die Ultraschallunterstützung kann die Drehzahl des Werkzeugs deutlich verringert werden, was die Arbeitssicherheit erhöht und die Lärmemissionen vermindert. Für grössere Abtragbreiten werden bevorzugt zwei oder mehr derartige Werkzeuge hintereinander angeordnet.

In einer Variante des erlindungsgemässen Handgeräts zur materialabtragenden Bearbeitung von spröden und/oder duktil versagenden Werkstoffen ist der elektroakustische Wandler zur Erzeugung von Ultraschall - Torsionsschwingungen ausgebildet. Die Wellenlänge λ der erzeugten Torsionsschwingungen im Ultraschallbereich beträgt etwa 10 bis 40 cm. Durch diese Wahl der Wellenlänge können noch Bearbeitungswerkzeuge einer vernünftigen Baulänge für Handanwendungen eingesetzt werden. Die Gesarntbaulänge des Handgeräts inklusive Bearbeitungswerkzeug sollte dabei mindestens das Dreifache der halben Wellenlänge der erzeugten Ultraschallschwingung betragen. Die maximale Gesamtbaulänge des erfindungsgemässen Handgeräts sollte $10 \cdot \lambda/2$ nicht überschreiten.

Ein bevorzugtes Bearbeitungswerkzeug, das im Einsatz mit Ultraschall - Torsionsschwingungen unterstützt wird, ist ein rohr- oder stabförmiges Werkzeug der Länge $n\lambda/2$ mit n=1, 2, 3, ... , welches an seinem vorderen Ende mit Schneidkörpem bestückt ist. Auf diese Weise erfolgt die Ultraschallunterstützung in Richtung der Schnittkraft, wobei aufgrund der gewählten Baulänge des Bearbeitungswerkzeugs gewährleistet ist, dass am mit dem abzutragenden Werkstoff in Kontakt tretenden Bereich des Werkzeugs die Energie der Ultraschallschwingung im wesentlichen als kinetische Energie anliegt. Das derart ausgebildete Werkzeug in Verbindung mit dem Ultraschall - Torsionsschwingungen erzeugenden Handgerät ist für die Bearbeitung duktil versagender Werkstoffe, beispielsweise Aluminium-Verbundkonstruktionen, und spröder Werkstoffe geeignet, wobei durch die Ultraschallunterstützung in Richtung der Schneidkraft die Abtragrate deutlich erhöht wird.

Bei einem bevorzugten Bearbeitungswerkzeug sind in Schnittrichtung gesehen, hinter jedem Schneidkörper Ausnehmungen vorgesehen. Auf diese Weise können Torsionsschwingungen derart umgelenkt werden, dass neben den Schwingungen in Richtung der Schnittkraft auch eine Schwingungsunterstützung in Richtung der Anpresskraft erfolgt. Mit derart ausgebildeten Bearbeitungswerkzeugen, beispielsweise Bohrkronen, wird die erforderliche Anpresskraft deutlich reduziert.

Im Falle von scheibenförmigen Bearbeitungswerkzeugen, welche an ihrem Umfang und an den äusseren seitlichen Randbereichen Schneidkörper aufweisen und beispielsweise für die Schlitzbearbeitung einsetzbar sind, beträgt die axiale Erstreckung des Werkzeugs $n\lambda/2$ mit n=1, 2, 3 ... . Durch das Einleiten von Torsionswellen erfolgt eine Unterstützung in Richtung der Schnittkraft. Dadurch kann bei gleich guter Abbauleistung die Umdrehungszahl des scheibenförmigen Werkzeugs reduziert werden, was Arbeitssicherheit erhöht und Lärmemissionen verringert. In einer besonders bevorzugten Ausführungsvariante des scheibenförmigen Bearbeitungswerkzeugs beträgt der maximale Scheibendurchmesser bis etwa das Vierfache des Durchmessers der die Scheibe tragenden Welle. Bei diesen Durchmesserverhältnissen ist die Ultraschallunterstützung der Abbauleistungen des Werkzeugs besonders gut.

In einer bevorzugten Ausführungsvariante des erlindungsgemässen Handgeräts ist der Schwingungsverstärker mit einer durchgehenden Axialbohrung versehen, in welche radiale Absaugkanäle münden. Die Mündungen der Absaugkanäle sind im wesentlichen im Bereich von Schwingungsknoten der im Betrieb erzeugten Ultraschallschwingungen angeordnet. An die Absaugkanäle ist ein Staubsauger anschliessbar. Auf diese Weise ist die Voraussetzung geschaffen, das erzeugte Bohrklein durch die axiale Bohrung nach aussen abzuführen. In einer aftemativen Ausführungsvariante ist dem Schwingungsverstärker ein Absaugmodul vorgelagert, welches die Länge nλ/2 mit n= 1, 2, 3 ..., insbesondere λ/2, aufweist. Das Absaugmodul ist mit einer durchgehenden Axialbohrung versehen, in welche radiale Absaugkanäle münden. Die Mündungen der Absaugkanäle sind im wesentlichen im Bereich von Schwingungsknoten der im Betrieb erzeugten Ultraschallschwingungen angeordnet. An die Absaugkanäle ist ein Staubsauger anschliessbar.

Im folgenden wird die Erfindung unter Bezugnahme auf die schematischen Darstellungen noch näher erläutert. Die Darstellungen beschränken sich dabei auf die für das Verständnis der Erfindung erforderlichen Einzelheiten. Es zeigen:

Fig. 1          ein Ausführungsbeispiel eines erfindungsgemässen Handgerätes für longitudinale Ultraschallschwingungen mit eingespanntem Bearbeitungswerkzeug,

Figs. 2 - 12    teilweise Detail- und Schnittdarstellungen von Bearbeitungswerkzeugen zum Einsatz in Verbindung mit einem Handgerät für longitudinale Ultraschallschwingungen,

Fig. 13         ein Ausführungsbeispiel eines erfindungsgemässen Handgerätes für Ultraschall - Torsionsschwingungen mit eingespanntem Bearbeitungswerkzeug

Figs. 14 - 18   teilweise Detaildarstellungen von Bearbeitungswerkzeugen zum Einsatz in Verbindung mit einem Handgerät für Ultraschall - Torsionsschwingungen und

Fig. 19         einen Axialschnitt eines als Absaugeinrichtung ausgebildeten Schwingungsverstärkers.

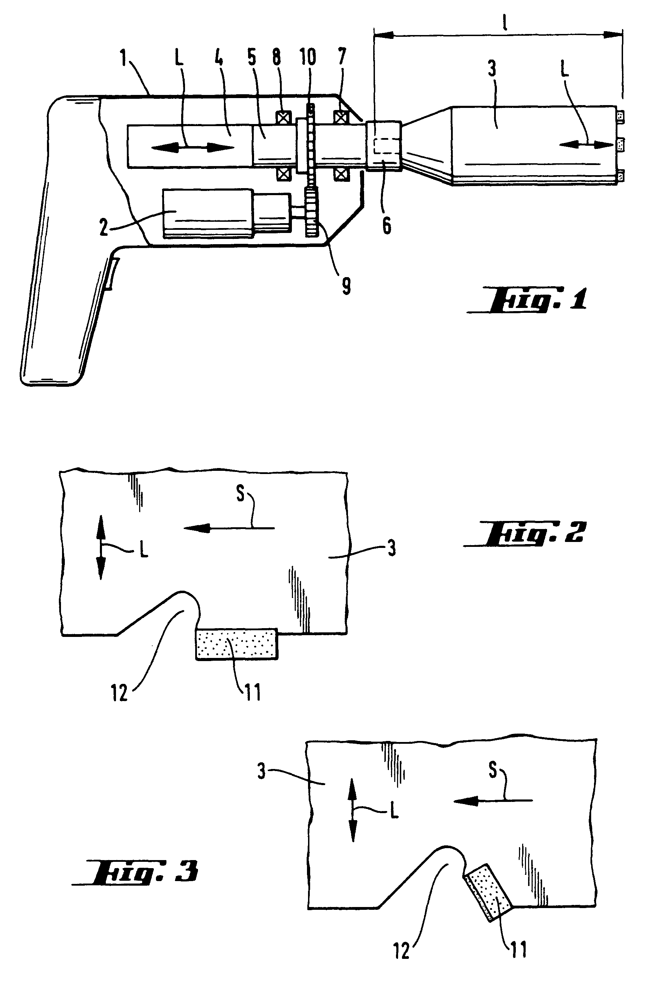

Das in Fig. 1 beispielsweise dargestellte Handgerät für die materialabtragende Bearbeitung von spröden und/oder duktil versagenden Werkstoffen weist ein Gehäuse 1 auf, in dem eine mit dem Bezugszeichen 2 versehene Antriebseinheit für ein mit dem Handgerät verbundenes Bearbeitungswerkzeug 3. Im Betrieb wird das Bearbeitungswerkzeug 3 durch die Antriebseinheit in axiale Rotation versetzt, um den abzutragenden Werkstoff zu bearbeiten. Innerhalb des Gehäuses 1 sind ein elektroakustischer Wandler 4 für die Erzeugung von Ultraschallschwingungen und ein Schwingungsverstärker 5 angeordnet. Im Betrieb des Handgerätes sind auf diese Weise der Rotation des Bearbeitungswerkzeugs Ultraschallschwingungen überlagerbar. Vorzugsweise sind der elektroakustische Wandler 4 und der Schwingungsverstärker 5 in axialer Verlängerung des Bearbeitungswerkzeugs 3 angeordnet. Auf diese Weise können die erzeugten Ultraschallschwingungen direkt in das jeweilige Bearbeitungswerkzeug eingekoppelt werden; es sind keine Umlenkeinrichtungen für die erzeugten Schwingungen erforderlich, welche zu Verlusten an Schwingungsenergie führen könnten.

Die einzelnen Bauelemente des elektroakustischen Wandlers 4 und des Schwingungsverstärkers 5 sind in ihrer axialen Länge vorzugsweise derart bemessen, dass die Fügestellen in Bereichen von Schwingungsknoten der erzeugten Ultraschallschwingungen angeordnet sind. Das Bearbeitungswerkzeug 3 ist in einer Werkzeugaufnahme 6 gehaltert, welche sich vorzugsweise gleichfalls im wesentlichen im Bereich eines Schwingungsknotens der erzeugten Ultraschallschwingungen befindet. In den Schwingungsknoten der Ultraschallschwingungen liegt die Schwingungsenergie im wesentlichen als potentielle Energie vor. Dadurch kommt es nur zu geringen mechanischen Beanspruchungen der dort angeordneten Elemente.

Die Antriebseinheit kann, wie dargestellt, unterhalb des elektroakustischen Schwingungswandlers 4 und des Schwingungsverstärkers 5 angeordnet sein, sie könnte aber auch im Griffteil des Gehäuses 1 untergebracht sein. Bei der in Fig. 1 dargestellten Ausührungsvariante des erfindungsgemässen Handgeräts ist der Schwingungsverstärker 5 drehbar gelagert, wie durch die Lager 7 und 8 angedeutet ist.

Ein schematisch angedeutetes Antriebsritzel 9 greift in eine am Schwingungsverstärker 5 angebrachte Umfangsverzahnung 10 ein und versetzt diesen im Betrieb in axiale Rotation. Die Lagerung des Schwingungsverstärkers 5 ist vorzugsweise im Bereich von Schwingungsknoten der erzeugten Ultraschallschwingungen angeordnet, um die mechanische Belastung möglichst gering zu halten. Die Werkzeugaufnahme 6 ist direkt am Vorderende des Schwingungsverstärkers 5 vorgesehen. Sie kann als separate Einheit ausgebildet sein, vorzugsweise ist sie am Schwingungsverstärker 5 integriert. Der elektroakustische Wandler 4 ist mit dem Schwingungsverstärker 5 drehfest verbunden.

Als elektroakustische Wandler werden magnetostriktive oder piezoelektrische Wandler eingesetzt. Die abgegebene Ultraschalleistung des elektroakustischen Wandlers liegt bei etwa 100 - 1000 W, bevorzugt bei etwa 200 - 500 W. Der elektroakustische Wandler kann ein Wandler für die Erzeugung von longitudinalen Ultraschallschwingungen sein, wie in Fig. 1 durch den Doppelpfeil L angedeutet, er kann aber auch ein Wandler für die Erzeugung von Ultraschall - Torsionsschwingungen sein. Der letzte Fall ist in Fig. 13 durch den Doppelpfeil T angedeutet.

Durch die Überlagerung von Ultraschallwellen wird der durch die Rotation des Bearbeitungswerkzeugs bedingte abrasive oder zerspanende Abbaumechanismus durch einen zusätzlichen Abbaumechanismus in Form eines direkten Stosses des Bearbeitungswerkzeugs unterstützt. Auf diese Weise steigt die Abbaurate gegenüber konventionellen Bearbeitungsmethoden ohne Ultraschallunterstützung stark, typischerweise um den Faktor 2-10 an. Zum Unterschied von konventionellen Hammerbohrgeräten nach dem schlagenden Prinzip, bei dem einzelne Spannungswellen durch das Bearbeitungswerkzeug laufen und dann abklingen, wird durch die Überlagerung von Ultraschallschwingungen im Bearbeitungswerkzeug eine stehende Welle aufrechterhalten, deren Energie in den abzutragenden Werkstoff eingeleitet wird. Im Fall von Bearbeitungswerkzeugen mit definierten Schneiden, beispielsweise Hartmetallschneiden oder polykristallinen Diamantschneiden (PKD) wird durch die Ultraschallunterstützung die Eindringtiefe der am abzutragenden Werkstoff angreifenden Schneide erhöht. Für die Erzielung einer der Bearbeitung ohne Ultraschallunterstützung vergleichbaren Eindringtiefe der Schneide kann daher die Anpresskraft reduziert werden. Dadurch wird bei vergleichbarer Eindringtiefe der Verschleiss der Schneide deutlich verringert. Dadurch können viele Werkstoffe mit Schneiden geringerer Härte bearbeitet werden, was die Werkzeugkosten unmittelbar beeinflusst. Bei undefinierten Schneiden, beispielsweise bei Schneidsegmenten aus Hartmetall oder Diamant oder bei Schleifschichten wird durch die Ultraschallunterstützung die bei der materialabtragenden Bearbeitung auftretende Wärme reduziert. Dies erweitert den Bereich von Trockenanwendungen von Handgeräten. Die erforderlichen Anpresskräfte werden deutlich reduziert. Die Selbstschärfung der Schneidsegmente wird unterstützt und erfolgt auch bei geringen Anpresskräflen. All dies resultiert in einer Erhöhung der Standzeit des Bearbeitungswerkzeugs und des Handgeräts, das durch die Ultraschallunterstützung einer geringeren mechanischen Belastung ausgesetzt ist.

Bei den in den Figs. 1 - 12 beispielsweise und teilweise in schematischer Detailansicht dargestellten Bearbeitungswerkzeugen handelt es sich um Werkzeuge zum Einsatz in Verbindung mit einem Handgerät, das für die Erzeugung von longitudinalen Ultraschallschwingungen ausgestattet ist. Das in Fig. 1 dargestellte Handgerät weist einen elektroakustischen Wandler 4 auf, der zur Erzeugung von longitudinalen Ultraschallschwingungen der Wellenlänge $\lambda$ von etwa 2-20 cm ausgelegt ist. Das angedeutete Bearbeitungswerkzeug 3 steht stellvertretend für ein stab- oder rohrtörmiges Werkzeug, welches in seinem vorderen Bereich mit Schneidkörpern 11 ausgestattet ist. Derartige Werkzeuge sind beispielsweise Bohrer oder Bohrkronen für die Bearbeitung spröder Werkstoffe. Die Länge I des Werkzeugs ist $n\lambda/2$, mit n=1,2,3,.... Das Werkzeug wird akustisch abgestimmt, wodurch Systembindung gegeben ist. Im Betrieb führt das Werkzeug 3 zusätzlich zur Rotation longitudinale Schwingungen aus. Die Ultraschallunterstützung der materialabtragenden Bearbeitung erfolgt in Richtung der Anpresskraft.

Zur Bearbeitung von duktil versagenden Werkstoffen mit kleiner Anpresskraft sind Schwingungen des Werkzeugs in Richtung der Anpresskraft und der Schnittkraft erwünscht. Zu diesem Zweck sind, wie in den Fig. 2 und 3 angedeutet, in Schnittrichtung S gesehen vor jedem Schneidkörper 11 Ausnehmungen 12 vorgesehen. Dadurch wird ein Teil der in das Bearbeitungswerkzeug eingeleiteten longitudinalen Schwingungen in Richtung der Schnittkraft umgelenkt. Die Schneidkörper 11 in den Figs. 2 und 3 unterscheiden sich dadurch, dass in Fig. 2 ein Schneidsegment aus Hartmetall angedeutet ist, welches sich etwa parallel zur Schnittrichtung erstreckt. In Fig. 3 wird der Schneidkörper 11 durch eine PKD-Schneide gebildet, die gegenüber der Schnittrichtung geneigt angeordnet ist.

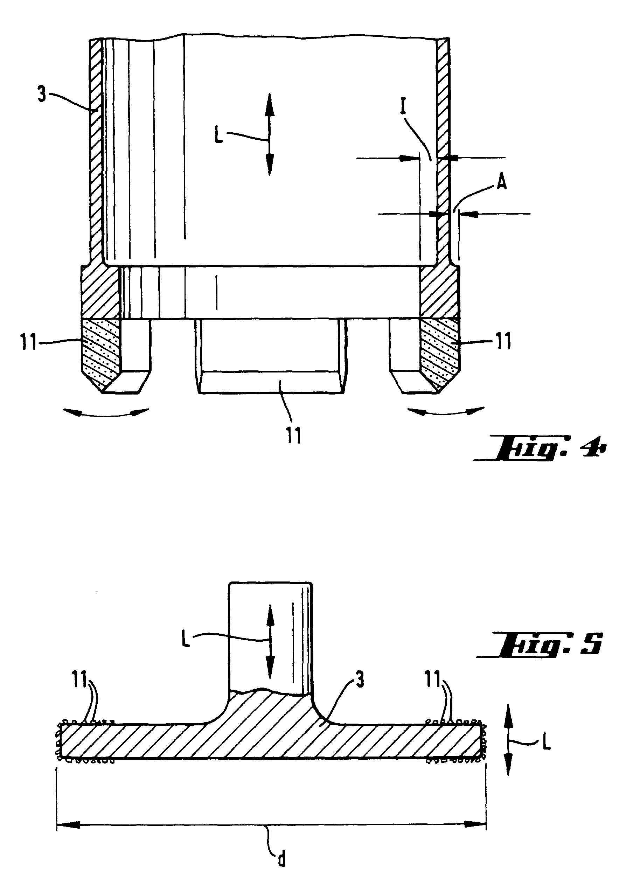

Es kann auch erwünscht sein, zusätzlich Schwingungen des Bearbeitungswerkzeugs 3 senkrecht zur Schnittrichtung anzuregen. Wie in Fig. 4 angedeutet, wird dies beispielsweise durch eine asymmetrische Anordnung der Schneidkörper 11 am Vorderende eines rohrförmigen Werkzeugs, beispielsweise einer Bohrkrone, erzielt. Im vorliegenden Beispiel ist dabei der äussere Überstand des die Schneidsegmente 11 tragenden Bereichs gegenüber dem Mantel des zylinderförmigen Werkzeugs kleiner als der innere Überstand I. Dadurch wird bei der Rotation des Werkzeugs eine Art Pumpbewegung erzeugt, welche die Spülwirkung bei Bohrkronen verbessert.

Das in Fig. 5 dargestellte scheibenförmige Bearbeitungswerkzeug 3 weist am Umfang und an den äusseren Seitenbereichen Schneidkörper 11 mit undefinierten Schneiden auf, beispielsweise Körner oder Splitter aus Hartmetall oder Diamant. Derartige Werkzeuge werden beispielsweise in der Schlitzbearbeitung eingesetzt. Die eingeleitete longitudinale Ultraschallschwingung L regt auf der Scheibe eine Biegemode an. Die Scheibe ist in axialer Richtung auf ganzzahlige Vielfache von $\lambda/2$ der Longitudinalmode der eingeleiteten Ultraschallschwingungen abgestimmt. Der Scheibendurchmesser d beträgt ein ganzzahliges Vielfaches der halben Wellenlänge der angeregten Biegemode. Die Schwingung des Werkzeugs 3 erfolgt lateral zur Schnittrichtung, was die Spülung erleichtert.

Das in Fig. 6 dargestellte Bearbeitungswerkzeug 3 ist ein scheibenförmiges Werkzeug. Es besitzt einen Aussendurchmesser d und weist an seinem Umfang und an den äusseren seitlichen Randbereichen Schneidkörper 11 mit undefinierten Schneiden auf. Seine axiale Erstreckung beträgt $n\lambda/2$ mit n = 1, 2, 3. In seinem zentralen Bereich weist das scheibenförmige Bearbeitungswerkzeug eine axiale Bohrung 13 eines bestimmten Durchmessers b auf, wobei das Werkzeug einen mittleren Durchmesser aufweist, der als die Hälfte der Summe des Aussendurchmessers d des Werkzeugs 3 und des Innendurchmessers b der axialen Bohrung 13 definiert ist. Vorzugsweise ist das Bearbeitungswerkzeug 3 gemäss der Gleichung

$$f_r = c_L / D_M \pi$$

auf eine radiale Resonanzfrequenz des scheibenförmigen Werkzeugs abgestimmt, wobei $f_r$ für die radiale Resonanzfrequenz $c_L$ für die longitudinale Schallgeschwindigkeit im Werkzeug und $D_M$ für den mittleren Durchmesser des scheibenförmigen Werkzeugs steht. Auf diese Weise wird die axial eingeleitete longitudinale Ultraschallwelle L durch Querkontraktionen in eine radiale Ultraschallwelle V umgelenkt. Dadurch erfolgt die Schwingung des für die Schlitzbearbeitung eingesetzten Bearbeitungswerkzeugs 3 wieder in Richtung der Anpresskraft.

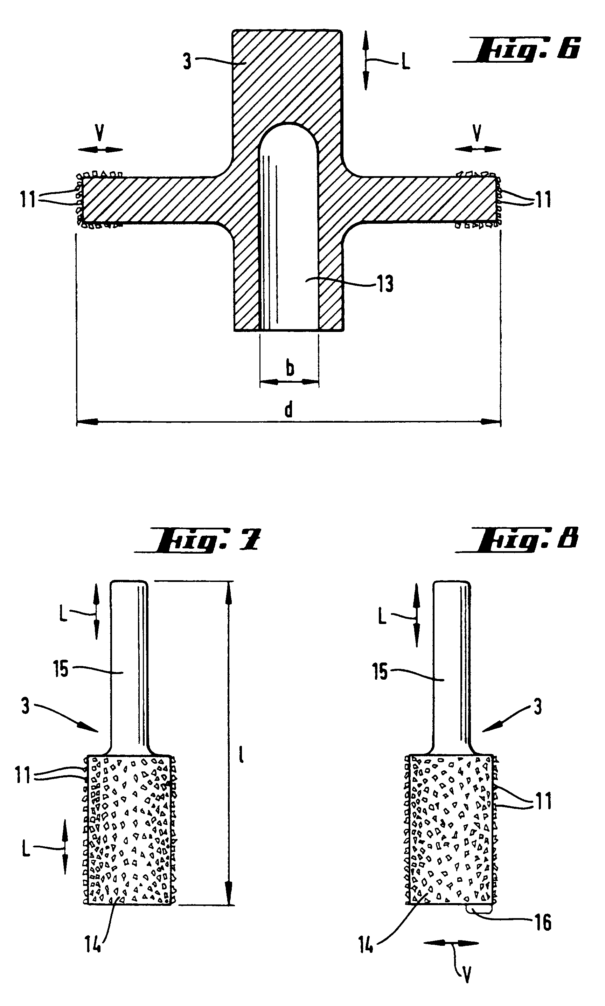

In den Figs. 7 und 8 ist ein fingerförmiges Bearbeitungswerkzeug 3 für die Schlitzbearbeitung dargestellt. Es weist ein stielförmiges Einsteckende 15 und einen zylindrischen Körper 14 auf, an dessen Aussenmantel die Schneidkörper 11 mit undefinierten Schneiden angeordnet sind. Seine axiale Länge I ist auf die eingeleiteten longitudinalen Schwingungen von $\lambda/2$ abgestimmt. Die Schwingung des Werkzeugs 3 erfolgt lateral zur Schnittrichtung, was die Spülung des Schneidbereiches erleichtert. Bei dem in Fig. 8 dargestellten fingerförmigen Bearbeitungswerkzeug 3 ist zusätzlich am Vorderende eine kleine exzentrische Masse von etwa 1-30 g angeordnet. Durch die kleine exzentrische Masse wird die longitudinale Schwingung in eine Biegemode umgewandelt. Die Schwingung des Werkzeugs erfolgt also in Richtung der Anpresskraft.

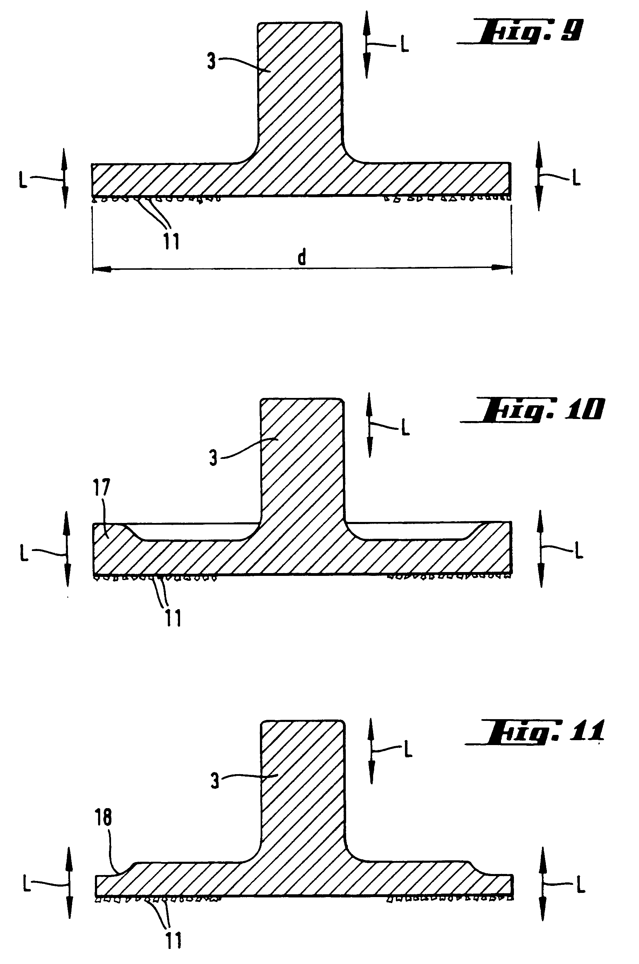

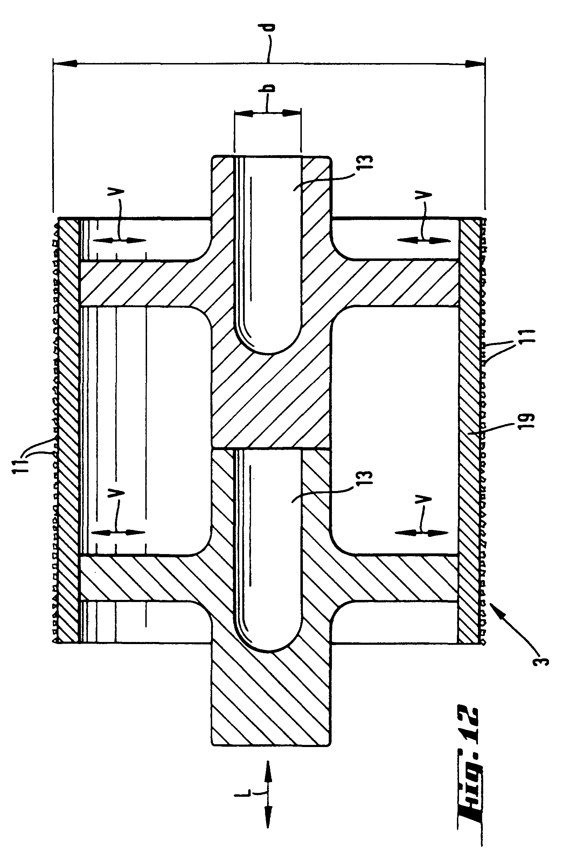

Die in den Figs. 9-11 dargestellten Bearbeitungswerkzeuge 3 sind Schleifwerkzeuge in Form von Topf- oder Planscheiben. An dem mit dem abzutragenden Werkstoff in Kontakt kommenden Bereich sind Schneidkörper 11 mit undefinierten Schneiden angeordnet. Die eingeleiteten logitudinalen Schwingungen regen auf der Scheibe eine Biegemode an. Die Schwingung des Werkzeugs 3 erfolgt in Richtung der Anpresskraft. Das Werkzeug weist eine axiale Länge von $n\lambda/2$, mit n=1,2,3,... , sein Durchmesser d beträgt ein ganzzahliges Vielfaches der halben Wellenlänge der auf der Scheibe angeregten Biegemode. Die Amplitude der Biegewellen kann noch verstärkt werden, indem der Ranbereich der Scheibe, wie in Fig. 10 angedeutet, dikker 17 oder, wie in Fig. 11 angedeutet, abgeflacht und dünner 18 gestaltet wird.

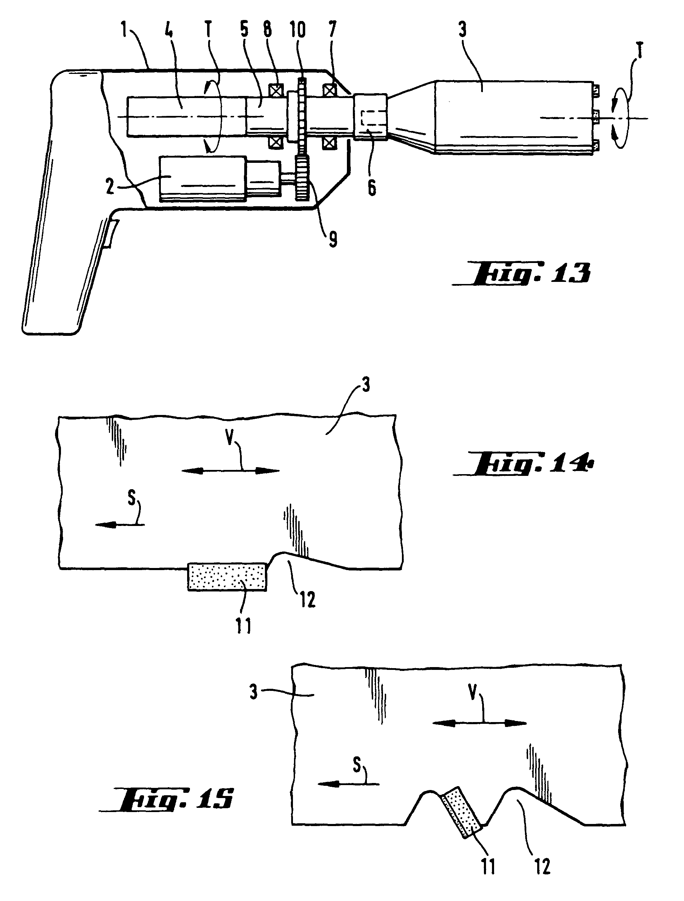

In Fig. 12 ist ein walzenförmiges Schleifwerkzeug 3 für die Oberflächenbearbeitung im Axialschnitt dargestellt. An seinem Umfang ist eine sich axial erstreckende Schleiffläche 19 mit Schleifkörpern 11 mit undefinierten Schneiden angeordnet. Die axiale Erstreckung des Werkzeugs 3 beträgt $n\lambda/2$ mit n=1, 2, 3 Das Werkzeug besitzt eine axiale Bohrung 13 mit einem Durchmesser b. Der Aussendurchmesser des walzenförmigen Werkzeugs 3 ist mit dem Bezugszeichen d versehen. Das Werkzeug weist einen mittleren Durchmesser auf, der als die Hälfte der Summe des Aussendurchmessers d des Werkzeugs 3 und des Innendurchmessers b der axialen Bohrung 13 definiert ist und gemäss der Gleichung

$$f_r = c_L / D_M \pi$$

auf eine radiale Resonanzfrequenz des walzenförmigen Werkzeugs abgestimmt ist. Dabei steht $f_r$ für die radiale Resonanzfrequenz, $c_L$ für die longitudinale Schallgeschwindigkeit im Werkzeug und $D_M$ für den mittleren Durchmesser des walzenförmigen Werkzeugs. Die eingeleitete longitudinale Ultraschallschwingung wird bei dem derart ausgebildeten Werkzeug in den Schwingungsknoten durch Querkontraktionen in radiale Wellen V umgewandelt. Die Schwingung des Werkzeugs erfolgt daher wiederum in Richtung der Anpressskraft. Für grössere Abtragbreiten werden, wie im dargestellten Ausführungsbeispiel angedeutet, bevorzugt zwei oder mehr derartige Werkzeuge 3 hintereinander angeordnet.

Das in Fig. 13 schematisch wiedergegebene Handgerät entspricht in seinem Aufbau weitgehend dem in Fig. 1 dargestellten Gerät. Der Unterschied besteht darin, dass der elektroakustische Wandler 4 zur Erzeugung von Ultraschall - Torsionswellen einer Wellenlänge $\lambda$ von etwa 5-20 cm ausgebildet ist. Das in Fig. 13 eingesteckt dargestellte stab- oder rohrförmige Bearbeitungswerkzeug 3 ist in diesem Fall auf die eingeleiteten Torsionswellen akustisch abgestimmt, seine axiale Erstreckung beträgt $n\lambda/2$ mit n=1,2,3,..., wodurch Systembindung gegeben ist. Im Betrieb führt das Werkzeug Torsionsschwingungen in Schnittrichtung aus. Das Werkzeug selbst ist vorzugsweise mit PKD-Schneiden oder Diamentsegmenten bestückt.

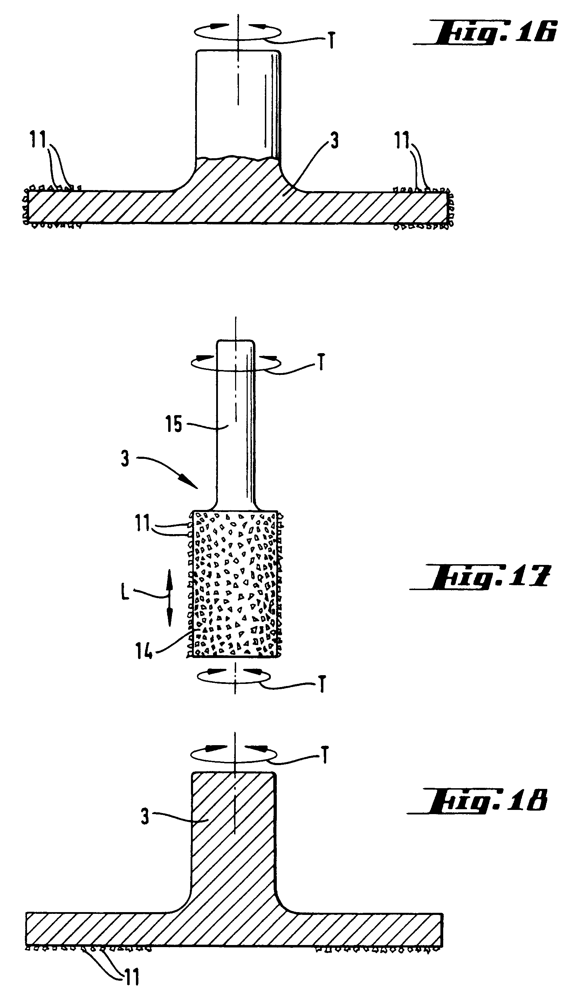

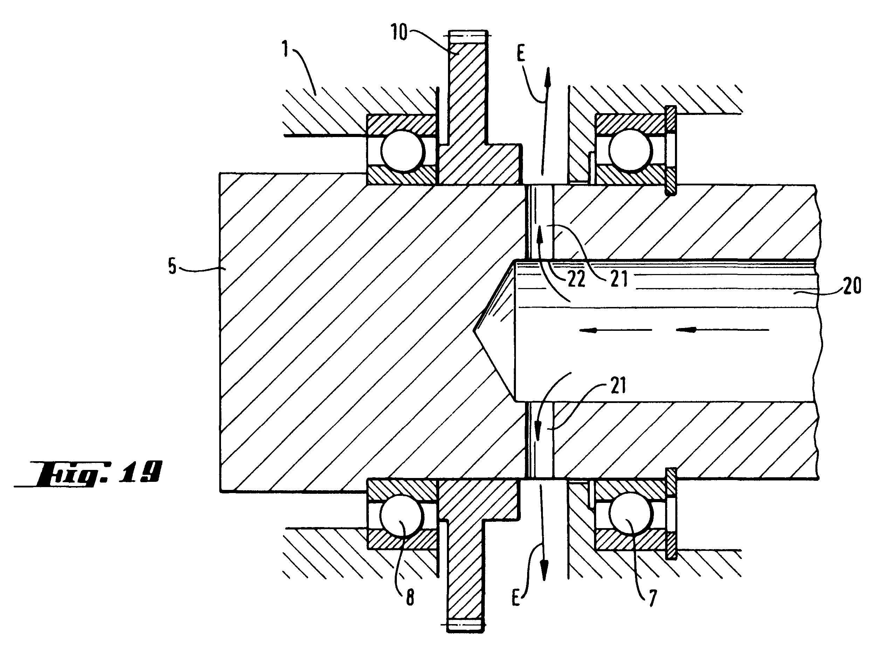

Für den Fall, dass sowohl Schwingungsunterstützung in Richtung der Schnittkraft als auch in Anpressrichtung erwünscht ist, sind, wie in den Figs. 14 und 15 angedeutet, in Schnittrichtung S gesehen, hinter den Schneidkörpem 11 Ausnehmungen 12 vorgesehen. Die Schneidkörper 11 in den Figs. 14 und 15 unterscheiden sich dadurch, dass in Fig. 14 ein Schneidsegment aus Hartmetall angedeutet ist, welches sich etwa parallel zur Schnittrichtung erstreckt, während in Fig. 15 der Schneidkörper 11 eine PKD-Schneide ist, die gegenüber der Schnittrichtung geneigt angeordnet ist.

Das in Fig. 16 dargestellte scheibenförmige Bearbeitungswerkzeug 3 zur Schlitzbearbeitung weist an seinem Umfang und an seinen äusseren Seitenbereichen Schneidkörper 11 mit undefinierten Schneiden auf. Die Scheibe ist in axialer Richtung auf Torsionsschwingungen von $\lambda/2$ abgestimmt. Die eingeleiteten Torsionsschwingungen resultieren in Torsionsschwingungen der Scheibe 3 in Richtung der Schnittkraft. Das Verhältnis der Durchmesser der die Scheibe tragenden Welle und der Scheibe kann bis etwa 1:4 betragen.

In Fig. 17 ist ein fingerförmiges Schleifwerkzeug 3 für die Schlitzbearbeitung dargestellt, welches ein stielförmiges Einsteckende 15 und einen zylindrischen Körper 14 aufweist. An der Umfangsfläche des Körpers 14 sind Schneidkörper 11 mit undefinierten Schneiden angeordnet. Die Länge des Werkzeugs beträgt nλ/2, mit n=1,2,3,... . Die eingeleiteten Ultraschall - Torsionsschwingungen resultieren in einer Torsionsschwingung des Werkzeugs in Schnittrichtung.

Fig. 18 zeigt ein Schleifwerkzeug 3 in Form einer Topf- oder Planscheibe. An ihrer dem Einstekkende abgewandten Unterseite ist die Scheibe mit Schneidkörpern 11 mit undefinierten Schneiden ausgestattet. Die axiale Länge des Werkzeugs 3 beträgt nλ/2, mit n=1,2,3,... . Die eingeleitete Ultraschall - Torsionsschwingung regt die Scheibe zu Torsionsschwingungen an. Die Scheibe schwingt somit in Richtung der Schnittkraft.

In Fig. 19 ist ein als Absaugeinrichtung ausgebildeter Schwingungsverstärker 5 im Axialschnitt dargestellt. Er ist mit einer Axialbohrung 20 versehen, in welche etwa radial verlaufende Absaugkanäle 21 münden. Die Mündungsbereiche 22 der Absaugkanäle 21 sind dabei im Bereich von Schwingungsknoten der erzeugten Ultraschallschwingungen angeordnet. Im dargestellten Ausführungsbeispiel münden die Absaugkanäle 21 im Bereich der Lagerungen 7 und 8 des rotierbaren Schwingungsverstärkers 5 ein. Die am Schwingungsverstärker 5 vorgesehene Umfangsverzahnung 10 für die Übertragung der Antriebskraft von der Antriebseinheit ist ebenfalls angedeutet. In einer alternativen und nicht näher dargestellten Ausführungsvariante kann dem Schwingungsverstärker 5 ein separates Absaugmodul vorgelagert sein und vorzugseise drehfest mit ihm verbunden sein. Die Ausbildung des Absaugmoduls ist dabei analog zu dem als Absaugeinrichtung ausgebildeten Schwingungsverstärker 5. Das über die Axialbohrung 20 angesaugte Bohrklein wird in Richtung des Pfeiles E durch die radialen Absaugkanäle 21 zu einem angeschlossenen Staubsauger abgeführt.

Die durch Ultraschallschwingungen angeregten Schwingungen des Bearbeitungswerkzeugs unterstützen den durch die Rotation des Bearbeitungswerkzeugs bedingten abrasiven oder zerspanenden Abbaumechanismus durch einen zusätzlichen Abbaumechanismus in Form eines direkten Stosses des Bearbeitungswerkzeugs in Richtung der Anpresskraft, der Schnittkraft oder lateral dazu. Durch diese Überlagerung von zwei Abbaumechanismen wird die Abbaurate noch weiter erhöht. Zugleich wird die vom Anwender des Gerätes aufzubringende Anpresskraft reduziert. Dadurch kann das Einsatzspektrum des Handgeräts noch weiter ausgedehnt werden. Die Lärm- und Vibrationsbelastung des Anwenders des erfindungsgemässen Handgeräts werden durch die Ultraschallunterstützung gegenüber den Hammerbohrgeräten herabgesetzt. Der Verschleiss der im Handgerät eingesetzten Bearbeitungswerkzeuge, beispielsweise durch Reibung oder chemische Wechselwirkung zwischen der Schneide des Bearbeitungswerkzeuges und dem Werkstück, wird verringert. Die Wärmebelastung an der Schneide des Werkzeugs wird reduziert. Dadurch wird die Standzeit der Handgerät - Werkzeug Kombination noch weiter erhöht. Die Sicherheit der Handgerät - Bearbeitungswerkzeug Kombinationen für Schleifeinsätze wird durch die Reduktion der erforderlichen Umdrehungszahlen der eingesetzten Werkzeuge gegenüber den bekannten Schleifgeräten erhöht. Das erfindungsgemässe Handgerät ist in Kombination mit den erfindungsgemässen Bearbeitungswerkzeugen für die materialabtragende Bearbeitung von spröden Werkstoffen wie auch für die Bearbeitung von duktil versagenden Werkstoffen, beispielsweise Weichmetallen wie Aluminium, Kupfer etc., einsetzbar. Durch die erfindungsgemässen Verbesserungen wird auch die Möglichkeit geschaffen, die bei der materialabtragenden Bearbeitung von Werkstoffen auftretende Staubbelastung des Anwenders noch weiter zu reduzieren

**Patentansprüche**

1. Handgerät zur materialabtragenden Bearbeitung von spröden und/oder duktil versagenden Werkstoffen, mit einer innerhalb eines Gehäuses (1) angeordneten Antriebseinheit (2) und mit einem von dieser um seine Längsachse rotierbaren Bearbeitungswerkzeug (3), **dadurch gekennzeichnet, dass** innerhalb des Gehäuses (1) ein elektroakustischer Wandler (4) für die Erzeugung von Ultraschallschwingungen und ein Schwingungsverstärker (5) angeordnet sind, mit denen der Rotation des Bearbeitungswerkzeugs (3) Ultraschallschwingungen überlagerbar sind, und dass der Schwingungsverstärker (5) innerhalb des Gehäuses (1) drehbar gelagert ist und mit Hilfe der Antriebseinheit (2) um seine Längsachse rotierbar ist, und eine Werkzeugaufnahme (6) am Schwingungsverstärker (5) vorgesehen ist.

2. Vorrichtung nach Anspruch 1, **dadurch gekennzeichnet, dass** die Ultraschallschwingungen eine Frequenz und eine Amplitude aufweisen, dass gilt,

$$0,5 \cdot v < \omega \cdot 2 \cdot a < 5 \cdot v,$$

wobei w die Kreisfrequenz und a die Amplitude der Ultraschallschwingung bezeichnet, und v für die Schnittgeschwindigkeit des Bearbeitungswerkzeugs (3) im abzutragenden Werkstoff in Metern/Sekunde steht.

**3.** Vorrichtung nach Anspruch 1 oder 2, **dadurch gekennzeichnet, dass** der elektroakustische Wandler (4) eine Ultraschalleistung von etwa 100 W bis etwa 1000 W, vorzugsweise etwa 200 W bis etwa 500 W abgibt.

**4.** Vorrichtung nach einem der vorangehenden Ansprüche, **dadurch gekennzeichnet, dass** der elektroakustische Wandler (4) ein magnetostriktiver oder ein piezoelektrischer Wandler ist.

**5.** Vorrichtung nach einem der vorangehenden Ansprüche, **dadurch gekennzeichnet, dass** das Bearbeitungswerkzeug (3) in der Werkzeugaufnahme (6) gehaltert ist, die im wesentlichen im Bereich eines Schwingungsknotens der erzeugten Ultraschallschwingungen angeordnet ist.

**6.** Vorrichtung nach einem der vorangehenden Ansprüche, **dadurch gekennzeichnet, dass** die Fügestellen der einzelnen Komponenten des elektroakustischen Wandlers (4) und des Schwingungsverstärkers (5) in Bereichen von Schwingungsknoten der erzeugten Ultraschallschwingungen angeordnet sind.

**7.** Vorrichtung nach einem der vorangehenden Ansprüche, **dadurch gekennzeichnet, dass** die axiale Länge (I) des Bearbeitungswerkzeugs (3) derart bemessen ist, dass am mit dem zu bearbeitenden Werkstoff in Kontakt tretenden Bereich ein Schwingungsbauch der erzeugten Ultraschallschwingungen anliegt.

**8.** Vorrichtung nach einem der vorangehenden Ansprüche, **dadurch gekennzeichnet, dass** das Material für das Bearbeitungswerkzeug (3) eine geringe Dämpfung gegenüber den Ultraschallschwingungen aufweist, vorzugsweise ein gehärteter Kohlenstoffstahl oder eine Aluminium- oder Titanlegierung ist.

**9.** Vorrichtung nach einem der vorangehenden Ansprüche, **dadurch gekennzeichnet, dass** der elektroakustische Wandler (4) zur Erzeugung von longitudinalen Ultraschallschwingungen (L) der Wellenlänge λ von etwa 10 bis 40 cm ausgebildet ist, die in das Bearbeitungswerkzeug (3) einkoppelbar sind.

**10.** Vorrichtung nach Anspruch 9, **dadurch gekennzeichnet, dass** das Bearbeitungswerkzeug (3) ein rohr- oder stabförmiges Werkzeug der Länge nλ/2 mit n = 1, 2, 3, ... ist, welches an seinem vorderen Ende mit Schneidkörpern (11) bestückt ist.

**11.** Vorrichtung nach Anspruch 10, **dadurch gekennzeichnet, dass**, in Schnittrichtung (S) gesehen, vor jedem Schneidkörper (11) eine Ausnehmung (12) vorgesehen ist.

**12.** Vorrichtung nach Anspruch 10, **dadurch gekennzeichnet, dass** das Bearbeitungswerkzeug (3) ein rohrförmiges Werkzeug mit Schneidkörpern (11) ist, welche mit asymmetrischen Ueberständen am Vorderende des Werkzeugs (3) angeordnet sind.

**13.** Vorrichtung nach Anspruch 9, **dadurch gekennzeichnet, dass** das Bearbeitungswerkzeug (3) ein scheibenförmiges Werkzeug ist, welches einen Aussendurchmesser (d) besitzt und an seinem Umfang und an den äusseren seitlichen Randbereichen Schneidkörper (11) aufweist, dessen axiale Erstreckung nλ/2 mit n = 1,2,3,... beträgt, und dessen zentraler Bereich eine axiale Bohrung (13) eines bestimmten Durchmessers (b) aufweist, wobei das Werkzeug (3) einen mittleren Durchmesser aufweist, der als die Hälfte der Summe des Aussendurchmessers (d) des Werkzeugs (3) und des Innendurchmessers (b) der axialen Bohrung (13) definiert ist und gemäss der Gleichung

$$f_r = c_L / D_M \pi$$

auf eine radiale Resonanzfrequenz des scheibenförmigen Werkzeugs (3) abgestimmt ist, wobei $f_r$ für die radiale Resonanzfrequenz $c_L$ für die longitudinale Schallgeschwindigkeit im Werkzeug (3) und $D_M$ für den mittleren Durchmesser des scheibenförmigen Werkzeugs (3) steht.

**14.** Vorrichtung nach Anspruch 9, **dadurch gekennzeichnet, dass** das Bearbeitungswerkzeug (3) ein scheibenförmiges Werkzeug ist, welches an seinem Umfang und an den äusseren seitlichen Randbereichen Schneidkörper (11) aufweist, dessen axiale Erstreckung nλ/2 mit n=1, 2, 3, ... beträgt, und dessen Aussendurchmesser (d) ein ganzzahliges Vielfaches der halben Wellenlänge von Biegewellen auf dem scheibenförmigen Werkzeug (3) beträgt, welche durch die longitudinalen Ultraschallschwingungen (L) induziert werden.

**15.** Vorrichtung nach Anspruch 9, **dadurch gekennzeichnet, dass** das Bearbeitungswerkzeug (3) ein fingerförmiges Schleifwerkzeug (14,15) ist, dessen Aussenmantel mit Schneidkörpern (11) besetzt ist, und dessen axiale Länge (I) ein ganzzahliges Vielfaches der halben Wellenlänge der Ultraschallschwingungen (L) beträgt.

**16.** Vorrichtung nach Anspruch 9, **dadurch gekennzeichnet, dass** das Bearbeitungswerkzeug (3) ein Schleifwerkzeug in Form einer Topf- oder Planscheibe ist, welche an ihrem mit dem zu bearbeitenden Werkstoff in Kontakt tretenden Bereich mit Schneidkörpern (11) ausgestattet ist, dessen axiale Erstreckung $n\lambda/2$ mit n=1, 2, 3, ... beträgt, und dessen Durchmesser (d) ein ganzzahliges Vielfaches der halben Wellenlänge von Biegeschwingungen beträgt, welche durch die longitudinalen Ultraschallschwingungen (L) im scheibenförmigen Schleifwerkzeug (3) angeregt werden.

17. Vorrichtung nach Anspruch 9, **dadurch gekennzeichnet, dass** das Bearbeitungswerkzeug (3) ein walzenförmiges Schleifwerkzeug ist, an dessen Umfang eine axiale Schleiffläche (19) mit Schneidkörpern (11) angeordnet ist, dessen axiale Erstreckung $n\lambda/2$ mit n=1, 2, 3 ... beträgt, und welches eine axiale Bohrung (13) eines bestimmten Durchmessers (b) aufweist, wobei das Werkzeug einen mittleren Durchmesser aufweist, der als die Hälfte der Summe des Aussendurchmessers (d) des Werkzeugs und des Innendurchmessers (b) der axialen Bohrung (13) definiert ist und gemäss der Gleichung

$$f_r = c_L/D_M\pi$$

auf eine radiale Resonanzfrequenz des walzenförmigen Werkzeugs (3) abgestimmt ist, wobei $f_r$ für die radiale Resonanzfrequenz, $c_L$ für die longitudinale Schallgeschwindigkeit im Werkzeug und $D_M$ für den mittleren Durchmesser des walzenförmigen Werkzeugs (3) steht.

18. Vorrichtung nach einem der Ansprüche 1 bis 8, **dadurch gekennzeichnet, dass** der elektroakustische Wandler (4) zur Erzeugung von Torsionsschwingungen (T) der Wellenlänge $\lambda$ von etwa 10 bis 40 cm ausgebildet ist, die in das Bearbeitungswerkzeug (3) einkoppelbar sind.

19. Vorrichtung nach Anspruch 18, **dadurch gekennzeichnet, dass** das Bearbeitungswerkzeug (3) ein rohr- oder stabförmiges Werkzeug der Lange $n\lambda/2$ mit n=1,2,3, ... ist, welches an seinem vorderen Ende mit Schneidkörpern (11) bestückt ist.

20. Vorrichtung nach Anspruch 19, **dadurch gekennzeichnet, dass**, in Schnittrichtung (S) gesehen, hinter jedem Schneidkörper (11) eine Ausnehmung (12) vorgesehen ist.

21. Vorrichtung nach Anspruch 18, **dadurch gekennzeichnet, dass** das Bearbeitungswerkzeug (3) ein scheibenförmiges Werkzeug ist, welches an seinem Umfang und an den äusseren seitlichen Randbereichen Schneidkörper (11) aufweist und dessen axiale Erstreckung $n\lambda/2$ mit n=1, 2, 3 ... beträgt.

22. Vorrichtung nach Anspruch 21, **dadurch gekennzeichnet, dass** der Scheibendurchmesser bis etwa das Vierfache des Durchmessers der die Scheibe tragenden Welle beträgt.

23. Vorrichtung nach einem der vorangehenden Ansprüche, **dadurch gekennzeichnet, dass** der Schwingungsverstärker (4) mit einer Axialbohrung (20) versehen ist, in welche radiale Absaugkanäle (21) münden, deren Mündungen (22) im wesentlichen im Bereich von Schwingungsknoten der im Betrieb erzeugten Ultraschallschwingungen angeordnet sind.

24. Vorrichtung nach einem der Ansprüche 1 bis 22, **dadurch gekennzeichnet, dass** dem Schwingungsverstärker (4) ein Absaugmodul vorgelagert ist, welches die Länge $n\lambda/2$ mit n= 1, 2, 3 ..., insbesondere $\lambda/2$, aufweist und mit einer Axialbohrung versehen ist, in welche radiale Absaugkanäle münden, deren Mündungen im wesentlichen im Bereich von Schwingungsknoten der im Betrieb erzeugten Ultraschallschwingungen angeordnet sind.

**Claims**

1. Hand tool for machining brittle and/or ductile failing materials, comprising a drive unit (2) configured inside a housing (1) and a processing tool (3) which is rotated by the latter around its longitudinal axis, **characterised in that** inside the housing (1) are accommodated an electro-acoustic converter (4) for generating ultrasonic oscillations and an oscillation amplifier (5) by means of which the rotation of the processing tool (3) can be superposed by ultrasonic oscillations, and the oscillation amplifier (5) is rotary mounted within the housing and rotary around its longitudinal axis with the aid of the drive unit (2), and a tool chuck (6) is provided on the oscillation amplifier (5).

2. Apparatus according to Claim 1, **characterised in that** the ultrasonic oscillations comprise a frequency and an amplitude according to

$$0.5 \times v < \omega \times 2 \times a < 5 \times v$$

where $\omega$ is the angular frequency and a the amplitude of the ultrasonic oscillation, and v represents the cutting speed of the processing tool (3) in the material to be processed in meters/sec.

3. Apparatus according to Claim 1 or 2, **characterised in that** the electro-acoustic converter (4) generates an ultrasonic output between approximately 100 W and approximately 1,000 W, preferably between approximately 200 W and approximately 500 W.

4. Apparatus according to one of the above claims, **characterised in that** the electro-acoustic converter (4) is a magneto-strictive or piezo-electric converter.

5. Apparatus according to one of the above claims, **characterised in that** the processing tool (3) is held in a tool chuck (6) which is essentially configured in the area of an oscillation node of the generated ultrasonic oscillations.

6. Apparatus according to one of the above claims, **characterised in that** the points of coincidence of the individual components of the electro-acoustic converter (4) and the oscillation amplifier (5) are configured in areas of oscillation nodes of the generated ultrasonic oscillations.

7. Apparatus according to one of the above claims, **characterised in that** the axial length (I) of the processing tool (3) is dimensioned in such a manner that a maximum oscillation of the generated ultrasonic oscillations is applied to the area which makes contact with the material to be processed.

8. Apparatus according to one of the above claims, **characterised in that** the material for the processing tool (3) has low attenuation relative to the ultrasonic oscillations, preferably a hardened carbon steel or an aluminium or titanium alloy.

9. Apparatus according to one of the above claims, **characterised in that** the electro-acoustic converter (4) is designed for generating longitudinal ultrasonic oscillations (L) of wavelength $\lambda$ of approximately between 10 and 40 cm which are coupled into the processing tool (3).

10. Apparatus according to Claim 9, **characterised in that** the processing tool (3) is a tubular or bar shaped tool of length $n\lambda/2$ with n = 1, 2, 3, ..., which is at its front end fitted with cutting elements (11).

11. Apparatus according to Claim 10, **characterised in that** a cut out (12) is provided in front of each cutting element (11), as seen in the cutting direction (S).

12. Apparatus according to Claim 10, **characterised in that** the processing tool (3) is a tubular tool with cutting elements (11) which are configured with asymmetrical protrusions at the front end of the tool (3).

13. Apparatus according to Claim 9, **characterised in that** the processing tool (3) is a disc shaped tool with an outside diameter (d) and at its periphery and on the outer lateral edge areas cutting elements (11) the axial extent of which is $n\lambda/2$ with n = 1, 2, 3, ..., and the central area of which comprises an axial bore (13) of a specified diameter (b), and the tool (3) has a mean diameter which is defined as half the sum of the outside diameter (d) of the tool (3) and the inside diameter (b) of the axial bore (13) and which is according to the equation

$$f_r = c_L/D_M\pi$$

matched to a radial resonance frequency of the disc shaped tool (3), where $f_r$ represents the radial resonance frequency, $C_L$ for the longitudinal sound speed in the tool (3) and $D_M$ the mean diameter of the disc shaped tool (3).

14. Apparatus according to Claim 9, **characterised in that** the processing tool (3) is a disc shaped tool having on its periphery and on the outer lateral edge areas cutting elements (11) the axial extent of which is $n\lambda/2$ with n = 1, 2, 3, ..., and the outside diameter (d) of which is a full number multiple of half the wavelength of bending waves on the disc shaped tool (3) which are induced by the longitudinal ultrasonic oscillations (L).

15. Apparatus according to Claim 9, **characterised in that** the processing tool (3) is a finger shaped grinding tool (14, 15) the outer casing of which is fitted with cutting elements (11) and the axial length (I) of which is a full number multiple of half the wavelength of the ultrasonic oscillations (L).

16. Apparatus according to Claim 9, **characterised in that** the processing tool (3) is a grinding tool in the form of a cup- or faceplate which are at their area which makes contact with the material to be processed equipped with cutting elements (11), the axial extent of which is $n\lambda/2$ with n = 1, 2, 3, ..., and the diameter (d) of which is a full number multiple of half the wavelength of bending oscillations which are excited in the disc shaped grinding tool (3) by the longitudinal ultrasonic oscillations (L).

17. Apparatus according to Claim 10, **characterised in that** the processing tool (3) is a roller shaped grinding tool which has at its periphery an axial grinding surface (19) with cutting elements (11) the axial extent of which is $n\lambda/2$ with n = 1, 2, 3, ..., and which has an axial bore (13) of a specified diameter (b), and the tool has a mean diameter which is defined as half the sum of the outside diameter (d) of the tool and the inside diameter (b) of the axial bore (13) and, according to the equation

$$f_r = C_L/D_M\pi$$

matched to a radial resonance frequency of the roller shaped tool (3), where $f_r$ represents the radial resonance frequency, $C_L$ the longitudinal sound speed in the tool and $D_M$ the mean diameter of the roller shaped tool (3).

**18.** Apparatus according to one of Claims 1 to 8, **characterised in that** the electro-acoustic converter (4) is designed for generating torsional oscillations (T) of wavelength λ of approximately between 10 and 40 cm which are coupled into the processing tool (3).

**19.** Apparatus according to Claim 18, **characterised in that** the processing tool (3) is a tubular or bar shaped tool of length nλ/2 with n = 1, 2, 3, ..., which is at its front end fitted with cutting elements (11).

**20.** Apparatus according to Claim 19, **characterised in that** a cut out (12) is provided behind each cutting element (11), as seen in the cutting direction (S).

**21.** Apparatus according to Claim 18, **characterised in that** the processing tool (3) is a disc shaped tool which has at its periphery and on the outer lateral edge areas cutting elements (11) and the axial extent of which is nλ/2 with n = 1, 2, 3, ....

**22.** Apparatus according to Claim 21, **characterised in that** the disc diameter is up to approximately four times the diameter of the shaft which carries the disc.

**23.** Apparatus according to one of the above claims, **characterised in that** the oscillation amplifier (4) is provided with an axial bore (20) into which merge radial suction channels (21) the mouths (22) of which are essentially configured in the area of oscillation nodes of ultrasound oscillations generated during operation.

**24.** Apparatus according to one of Claims 1 to 22, **characterised in that** upstream of the oscillation amplifier (4) is a suction module of length nλ/2 with n = 1, 2, 3, ..., in particular λ/2, provided with an axial bore into which merge radial suction channels the mouths of which are essentially configured in the area of oscillation nodes of ultrasonic oscillation generated during operation.

## Revendications

**1.** Appareil portatif pour l'usinage par enlèvement de matière de matériaux fragiles et/ou non ductiles, comprenant une unité d'entraînement (2) disposée à l'intérieur d'un carter (1) et comprenant un outil d'usinage (3) pouvant être mis en rotation par celle-ci autour de son axe longitudinal, **caractérisé en ce que**, à l'intérieur du carter (1), sont implantés un transducteur électroacoustique (4) pour générer des vibrations ultrasonores et un amplificateur de vibrations (5) qui permettent de superposer des vibrations ultrasonores à la rotation de l'outil d'usinage (3), et que l'amplificateur de vibrations (5) est monté en rotation à l'intérieur du carter (1) et peut être mis en rotation autour de son axe longitudinal à l'aide de l'unité d'entraînement (2), et un mandrin d'outil (6) est monté sur l'amplificateur de vibrations (5).

**2.** Dispositif selon la revendication 1, **caractérisé en ce que** les vibrations ultrasonores possèdent une fréquence et une amplitude, telles que

$$0{,}5v < \omega \cdot 2 \cdot a < 5 \cdot v$$

sachant que ω désigne la fréquence angulaire et a l'amplitude de la vibration ultrasonore et que v correspond à la vitesse de coupe, en mètres/seconde, de l'outil d'usinage (3) dans le matériau à enlever.

**3.** Dispositif selon la revendication 1 ou 2, **caractérisé en ce que** le transducteur électroacoustique (4) délivre une puissance ultrasonore d'environ 100 W à environ 1 000 W, de préférence d'environ 200 W à environ 500 W.

**4.** Dispositif selon une des revendications précédentes, **caractérisé en ce que** le transducteur électroacoustique (4) est un transducteur magnétostrictif ou un transducteur piézoélectrique.

**5.** Dispositif selon une des revendications précédentes, **caractérisé en ce que** l'outil d'usinage (3) est maintenu dans le mandrin d'outil (6) qui se trouve sensiblement dans la zone d'un noeud vibratoire des vibrations ultrasonores générées.

**6.** Dispositif selon une des revendications précédentes, **caractérisé en ce que** les points de jonction des différents composants du transducteur électroacoustique (4) et de l'amplificateur de vibrations (5) se trouvent dans la zone des noeuds vibratoires des vibrations ultrasonores générées.

**7.** Dispositif selon une des revendications précédentes, **caractérisé en ce que** la longueur axiale (1) de l'outil d'usinage (3) est calculée pour que le ventre des vibrations ultrasonores générées se trouve dans la zone en contact avec le matériau à usiner.

**8.** Dispositif selon une des revendications précédentes, **caractérisé en ce que** la matière de l'outil d'usinage (3) possède un faible amortissement par

rapport aux vibrations ultrasonores et est, de préférence, un acier au carbone trempé ou un alliage à base d'aluminium ou de titane.

9. Dispositif selon une des revendications précédentes, **caractérisé en ce que** le transducteur électroacoustique (4) est conçu pour générer des vibrations ultrasonores longitudinales (L) de longueur d'onde λ d'environ 10 à 40 cm qui peuvent être couplées dans l'outil d'usinage (3).

10. Dispositif selon la revendication 9, **caractérisé en ce que** l'outil d'usinage (3) est un outil en forme de tube ou de barre de longueur nλ/2 avec n=1,2,3,..., qui est garni de corps de coupe (11) à son extrémité avant.

11. Dispositif selon la revendication 10, **caractérisé en ce qu'**un évidement (12) est prévu devant chaque corps de coupe (11) par rapport à la direction de coupe (S).

12. Dispositif selon la revendication 10, **caractérisé en ce que** l'outil d'usinage (3) est un outil tubulaire muni de corps de coupe (11) qui sont disposés avec des parties débordantes asymétriques à l'extrémité avant de l'outil (3).

13. Dispositif selon la revendication 9, **caractérisé en ce que** l'outil d'usinage (3) est un outil en forme de disque qui possède un diamètre extérieur (d) et comporte, sur sa périphérie et sur les zones des bords latéraux extérieurs, des corps de coupe (11), dont l'extension axiale est de nλ/2 avec n=1,2,3,..., et dont la zone centrale est pourvue d'un trou axial (13) de diamètre déterminé (b), l'outil (3) possédant un diamètre moyen qui est défini comme étant la moitié de la somme du diamètre extérieur (d) de l'outil (3) et du diamètre intérieur (b) du trou axial (13) et qui, selon l'équation

$$f_r = c_L / D_M \pi,$$

est adapté à une fréquence de résonance radiale de l'outil en forme de disque (3), $f_r$ correspondant à la fréquence de résonance radiale, $c_L$ à la vitesse longitudinale du son dans l'outil (3) et $D_M$ au diamètre moyen de l'outil en forme de disque (3).

14. Dispositif selon la revendication 9, **caractérisé en ce que** l'outil d'usinage (3) est un outil en forme de disque qui comporte, sur sa périphérie et sur les zones des bords latéraux extérieurs, des corps de coupe (11), dont l'extension axiale est de nλ/2 avec n=1,2,3,..., et dont le diamètre extérieur (d) est un multiple entier de la demi-longueur d'onde d'ondes de flexion induites sur l'outil en forme de disque par les vibrations ultrasonores longitudinales (L).

15. Dispositif selon la revendication 9, **caractérisé en ce que** l'outil d'usinage (3) est un outil de rectification en forme de doigt (14, 15) dont la surface périphérique extérieure est garnie de corps de coupe (11) et dont la longueur axiale (1) est un multiple entier de la demi-longueur d'onde des vibrations ultrasonores (L).

16. Dispositif selon la revendication 9, **caractérisé en ce que** l'outil d'usinage (3) est un outil de rectification en forme de meule boisseau ou de meule plane qui est garnie, dans sa zone en contact avec le matériau à usiner, de corps de coupe (11), dont l'extension axiale est de nλ/2 avec n=1,2,3,..., et dont le diamètre (d) est un multiple entier de la demi-longueur d'onde de vibrations de flexion générées dans l'outil de rectification en forme de disque (3) par les vibrations ultrasonores longitudinales (L).

17. Dispositif selon la revendication 9, **caractérisé en ce que** l'outil d'usinage (3) est un outil de rectification en forme de tambour, à la périphérie duquel est disposée une surface abrasive axiale (19) garnie de corps de coupe (11), dont l'extension axiale est de nλ/2 avec n=1,2,3,..., et qui est pourvu d'un trou axial (13) de diamètre déterminé (b), l'outil possédant un diamètre moyen qui est défini comme étant la moitié de la somme du diamètre extérieur (d) de l'outil et du diamètre intérieur (b) du trou axial (13) et qui, selon l'équation

$$f_r = c_L / D_M \pi,$$

est adapté à une fréquence de résonance radiale de l'outil en forme de tambour (3), $f_r$ correspondant à la fréquence de résonance radiale, $c_L$ à la vitesse longitudinale du son dans l'outil (3) et $D_M$ au diamètre moyen de l'outil en forme de tambour (3).

18. Dispositif selon l'une des revendications 1 à 8, **caractérisé en ce que** le transducteur électroacoustique (4) est conçu pour générer des vibrations de torsion (T) de longueur d'onde λ d'environ 10 à 40 cm qui peuvent être couplées dans l'outil d'usinage (3).

19. Dispositif selon la revendication 18, **caractérisé en ce que** l'outil d'usinage (3) est un outil en forme de tube ou de barre de longueur nλ/2 avec n=1,2,3,..., qui est garni de corps de coupe (11) à son extrémité avant.

20. Dispositif selon la revendication 19, **caractérisé en ce qu'**un évidement (12) est prévu derrière chaque corps de coupe (11) par rapport à la direction de coupe (S).

21. Dispositif selon la revendication 18, **caractérisé en ce que** l'outil d'usinage (3) est un outil en forme de disque qui comporte, sur sa périphérie et sur les zones des bords latéraux extérieurs, des corps de coupe (11), et dont l'extension axiale est de $n\lambda/2$ avec n=1,2,3,....

22. Dispositif selon la revendication 21, **caractérisé en ce que** le diamètre du disque peut atteindre environ quatre fois le diamètre de l'arbre portant le disque.

23. Dispositif selon une des revendications précédentes, **caractérisé en ce que** l'amplificateur de vibrations (4) est pourvu d'un trou axial (20) dans lequel débouchent des canaux d'aspiration radiaux (21) dont les orifices débouchants (22) se trouvent sensiblement dans la zone des noeuds vibratoires des vibrations ultrasonores générées lors du fonctionnement.

24. Dispositif selon l'une des revendications 1 à 22, **caractérisé en ce qu'**en amont de l'amplificateur de vibrations (4) est monté un module d'aspiration qui possède la longueur $n\lambda/2$ avec n=1,2,3,..., en particulier $\lambda/2$, et qui est pourvu d'un trou axial dans lequel débouchent des canaux d'aspiration radiaux dont les orifices débouchants se trouvent sensiblement dans la zone des noeuds vibratoires des vibrations ultrasonores générées lors du fonctionnement.

_Fig. 1_

_Fig. 2_

_Fig. 3_

*Fig. 4*

*Fig. 5*

**Fig. 6**

**Fig. 7**

**Fig. 8**

*Fig. 9*

*Fig. 10*

*Fig. 11*

**Fig. 12**

*Fig. 13*

*Fig. 14*

*Fig. 15*

Fig. 16

Fig. 17

Fig. 18

EP 0 720 890 B2

Fig. 19

23